# EUROPEAN PATENT SPECIFICATION

(11) **EP 4 318 732 B1**
(45) Date of publication and mention of the grant of the patent: **28.10.2026**
(21) Application number: 22920816.0
(22) Date of filing: 16.12.2022
(51) Int. Cl.: H01M 10/42, H01M 50/14, H01M 50/591, H01M 50/242

(54) **BATTERY PACK ASSEMBLY HAVING IMPACT ABSORPTION FUNCTION AND APPARATUS AND METHOD FOR MANUFACTURING SAME**
BATTERIEPACKANORDNUNG MIT STOSSDÄMPFUNGSFUNKTION SOWIE VORRICHTUNG UND VERFAHREN ZUR HERSTELLUNG DAVON
ENSEMBLE BLOC-BATTERIE AYANT UNE FONCTION D'ABSORPTION D'IMPACT ET APPAREIL ET SON PROCÉDÉ DE FABRICATION

(30) Priority: 13.01.2022 KR 20220005308
(43) Date of publication of application: 07.02.2024
(73) Proprietor: LG ENERGY SOLUTION, LTD., Seoul 07335 (KR)
(72) Inventor: KIM, Hak Soon, Daejeon 34122 (KR); LEE, Jin Hyun, Daejeon 34122 (KR); HWANG, Jo Yeon, Daejeon 34122 (KR)
(74) Representative: Goddar, Heinz J.
(86) International application number: PCT/KR2022/020612
(87) International publication number: WO 2023/136487

(56) References cited:
- JP-A- 2000 173 641
- JP-A- 2010 092 603
- JP-A- 2014 164 815
- JP-B2- 6 072 564
- KR-A- 20120 088 485
- KR-A- 20160 019 785

## Description

### [Technical Field]

The present invention relates to a battery pack assembly having a shock absorption function and an apparatus and method for manufacturing the same, and more particularly to a battery pack assembly having a shock absorption function capable of absorbing or alleviating shock applied to a battery pack when the battery pack falls, thereby preventing physical damage to the battery pack, and an apparatus and method for manufacturing the same.

### [Background Art]

JP 6 072564 B2 discloses some of the features of independent claims 1, 2 and 8.

Secondary batteries, which are energy sources substituting for fossil fuels causing air pollution, have been applied to an electric vehicle (EV), a hybrid electric vehicle (HEV), a plug-in hybrid electric vehicle (P-HEV), and an energy storage system (ESS).

There are a lithium ion battery, a lithium polymer battery, a nickel cadmium battery, a nickel hydride battery, and a nickel zinc battery as secondary batteries that are widely used at present. In general, a plurality of unit secondary battery cells may be connected to each other in series or in parallel to constitute a battery module depending on required output voltage or charge and discharge capacities.

In particular, usage of a pouch-shaped lithium ion battery having a structure in which a stacked type or stacked and folded type electrode assembly is mounted in a pouch-shaped battery case made of an aluminum laminate sheet has gradually increased due to advantages of low manufacturing cost and high energy density.

Meanwhile, with rapid technological development of mobile communication, popular interest in various kinds of mobile devices, such as a smartphone and a tablet PC, has increased. A secondary battery, which is capable of being charged and discharged, is mounted in each of the mobile devices. When the mobile device falls due to user carelessness, the secondary battery mounted therein may be damaged.

In particular, an electrolytic solution is injected into a pouch-shaped secondary battery. When a pouch is damaged, e.g. torn, due to shock, therefore, the electrolytic solution leaks from the battery, whereby the mobile device may be broken.

### (Prior Art Documents)

Korean Patent Application Publication No. 2017- 0055175
Korean Patent Application Publication No. 2016-

### [Disclosure]

### [Technical Problem]

The present invention has been made in view of the above problems, and it is an object of the present invention to provide a battery pack assembly having a shock absorption function capable of protecting a battery pack from physical shock, such as fall, and an apparatus and method for manufacturing the same.

### [Technical Solution]

A battery pack assembly according to the present invention to accomplish the above object includes a battery pack (110) and a shock absorption member (120) provided at one side of the battery pack (110).

Also, in the battery pack assembly according to the present invention, the shock absorption member (120) includes a polymer resin provided with an air pocket portion (121) and wherein the air pocket portion is bar-shaped, filled with no polymer resin and provided at a position spaced apart from one side end surface of the battery pack by a predetermined distance so as to absorb external shock applied to the battery pack.

In addition, an apparatus for manufacturing a battery pack assembly according to the present invention includes a jig (200) configured to be filled with a polymer resin so that a shock absorption member (120) is to be formed at one side of a battery pack (110), a support unit (300) having a flat shape configured to support the battery pack (110) and the jig (200), the support unit having a predetermined area, and a hardening unit (400) configured to harden the polymer resin with which the jig (200) is filled, wherein the jig (200) includes a rectangular bottom plate (210) having a predetermined area, four side walls (220) extending along an edge of the bottom plate (210) by a predetermined height, an opening (230) provided in any one of the four side walls (220) so that one side edge of the battery pack (110) is seated on the bottom plate

(210), and an air formation bar (240) located among the four side walls (220) in the state in which one side surface of the air formation bar is in tight contact with the bottom plate (210).

Also, in the apparatus for manufacturing the battery pack assembly according to the present invention, a plurality of jigs (200) may be seated on an upper surface of the support unit (300).

Also, in the apparatus for manufacturing the battery pack assembly according to the present invention, the support unit (300) may be rotatable in a clockwise direction or a counterclockwise direction, the support unit being formed in a circular shape, and one or more jigs (200) may be located on the upper surface of the support unit (300).

Also, the apparatus for manufacturing the battery pack assembly according to the present invention may further include a washing unit (600) configured to remove the polymer resin remaining in the jig (200) and the support unit (300) after the battery pack (110) having the shock absorption member (120) formed thereon is separated from the jig (200).

Also, in the apparatus for manufacturing the battery pack assembly according to the present invention, the polymer resin may be a UV curable resin.

In addition, a method of manufacturing the battery pack assembly according to the present invention includes a first step of seating the battery pack (110) on a jig (200), a second step of filling the jig (200) with a polymer resin so that the polymer resin is located along one side of the battery pack (110), and a third step of hardening the polymer resin so that a shock absorption member (120) is formed at the one side of the battery pack (110), wherein the jig (200) includes a rectangular bottom plate (210) having a predetermined area, four side walls (220) extending along an edge of the bottom plate (210) by a predetermined height, an opening (230) provided in any one of the four side walls (220) so that one side edge of the battery pack (110) is seated on the bottom plate (210), and an air formation bar (240) located among the four side walls (220) in the state in which one side surface of the air formation bar is in tight contact with the bottom plate (210), and the inside of each of the four side walls is filled with the polymer resin.

Also, the method of manufacturing the battery pack assembly according to the present invention may further include a fourth step of separating the battery pack (110) having the shock absorption member (120) formed thereon from the jig (200).

Also, the method of manufacturing the battery pack assembly according to the present invention may further include a fifth step of washing the jig (200) in order to remove the polymer resin remaining in the jig.

Also, in the method of manufacturing the battery pack assembly according to the present invention, the polymer resin may be a UV curable resin, and a step of printing an upper surface of the battery pack (110) with a UV curable material may be further performed between the first step and the third step.

Also, in the method of manufacturing the battery pack assembly according to the present invention, a step of inspecting the battery pack assembly may be further performed between the third step and the fifth step.

### [Advantageous Effects]

A battery pack assembly having a shock absorption function according to the present invention has an advantage in that a shock absorption member is provided at a battery pack, whereby it is possible to prevent or minimize damage to the battery pack even though physical impact due to fall, etc. occurs.

In addition, the battery pack assembly having the shock absorption function according to the present invention has a merit in that it is possible to prevent or minimize leakage of an electrolytic solution from the battery pack at the time of physical impact due to fall, etc., whereby it is possible to reduce damage to the device.

In addition, a battery pack assembly manufacturing apparatus and method according to the present invention have an advantage in that a plurality of jigs each configured to allow a shock absorption member to be mounted thereto is provided at a support unit, whereby mass production is possible and furthermore manufacturing time can be reduced.

### [Description of Drawings]

FIG. 1 is a conceptual view of a battery pack assembly according to a preferred embodiment of the present invention.
FIG. 2 is a perspective view of a jig configured to manufacture the battery pack assembly according to the preferred embodiment of the present invention.
FIG. 3 is a plan view of an apparatus for manufacturing the battery pack assembly according to the preferred embodiment of the present invention.
FIG. 4 is a front view of the apparatus shown in FIG. 3.
FIG. 5 is a plan view showing the state in which a plurality of jigs is mounted to one support unit.
FIG. 6 is a plan view showing the state in which a plurality of battery packs is mounted to respective jigs.

### [Best Mode]

In the present application, it should be understood that the terms "comprises," "has," "includes," etc. specify the presence of stated features, numbers, steps, operations, elements, components, or combinations thereof, but do not preclude the presence or addition of one or more other features, numbers, steps, operations, elements, components, or combinations thereof.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery pack assembly having a shock absorption function according to the present invention and an apparatus and method for manufacturing the same will be described.

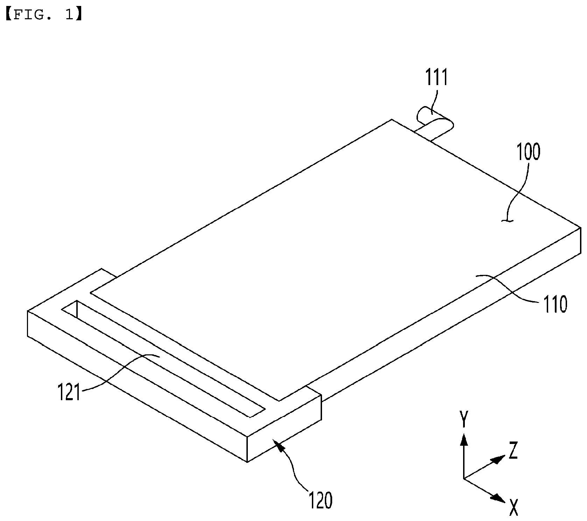

FIG. 1 is a conceptual view of a battery pack assembly according to a preferred embodiment of the present invention.

Referring to FIG. 1, the battery pack assembly according to the present invention has a function of protecting a battery pack when external shock is applied thereto.

Specifically, the battery pack assembly includes a battery pack 110 and a shock absorption member 120.

The battery pack 110 may have a flat hexahedral shape; however, the present invention is not limited thereto. An electrode assembly is received in a case, and a power connector 111 protrudes outwards from the case by a predetermined length.

A laminate sheet constituted by an outer coating layer, a metal layer, and an inner coating layer may be used as the case.

The inner coating layer is disposed in direct contact with the electrode assembly, and therefore the inner coating layer must exhibit high insulation properties and high resistance to an electrolytic solution. In addition, the inner coating layer must exhibit high sealability in order to hermetically seal the case from the outside, i.e. a thermally-bonded sealed portion between inner layers must exhibit excellent thermal bonding strength.

The inner coating layer may be made of a material selected from among a polyolefin-based resin, such as polypropylene, polyethylene, polyethylene acrylate, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, may be most preferably used.

The metal layer, which is disposed so as to abut the inner coating layer, corresponds to a barrier layer configured to prevent moisture or various kinds of gas from permeating into the battery from the outside. An aluminum thin film, which is lightweight and easily shapeable, may be used as a preferred material for the metal layer.

The outer coating layer is provided on the other surface of the metal layer. The outer coating layer may be made of a heat-resistant polymer that exhibits excellent tensile strength, resistance to moisture permeation, and resistance to air transmission such that the outer coating layer exhibits high heat resistance and chemical resistance while protecting the electrode assembly. As an example, the outer coating layer may be made of nylon or polyethylene terephthalate; however, the present invention is not limited thereto.

The electrode assembly received in the case may be classified as a stacked type electrode assembly, which is configured to have a structure in which a plurality of electrodes is stacked, a jelly-roll type electrode assembly, which is configured to have a structure in which a positive electrode and a negative electrode are wound in the state in which a separator is interposed therebetween, a laminated and stacked type electrode assembly, which is configured to have a structure in which a plurality of unit cells is stacked, or a stacked and folded type electrode assembly, which is configured to have a structure in which unit cells are wound in a state of being located on a separator sheet.

A unit cell is manufactured in order to manufacture the laminated and stacked type electrode assembly or the stacked and folded type electrode assembly. The unit cell may be a mono-cell, which is configured to have a structure in which a separator is interposed between a positive electrode and a negative electrode or a bi-cell, which is configured to have a structure in which a positive electrode, a negative electrode, and a positive electrode or a negative electrode, a positive electrode, and a negative electrode are stacked and a separator is interposed between the positive electrode and the negative electrode.

The electrode assembly according to the present invention may be configured to have a structure in which a negative electrode, a separator, a positive electrode, a separator, and a negative electrode are stacked, and the number of positive electrodes and negative electrodes constituting the electrode assembly may be freely set. In addition, the laminated and stacked type electrode assembly, in which a plurality of unit cells is laminated, may be used, and the structure of the electrode assembly may be applied to all electrode assemblies described in this specification.

The positive electrode and the negative electrode of the electrode assembly may be provided with a positive electrode tab and a negative electrode tab, respectively, and the pair of tabs may be formed so as to protrude outwards from the case by a predetermined length in a state of being connected respectively to a positive electrode lead and a negative electrode lead by spot welding or may be formed so as to protrude outwards through the power connector 111.

Here, an example of the power connector 111 may be a flexible printed circuit board (FPCB). The flexible printed circuit board (FPCB), which means a circuit board configured to have a structure in which a flammable film is formed on metal foil that is flexibly bent, such as copper foil, as an outer layer, is mounted in the battery pack 110 such that power and signals can be sent and received therethrough when the pack assembly 100 is mounted in a device.

The shock absorption member 120 is configured to absorb or alleviate shock applied to the battery pack 110 when the battery pack 110 falls in a state of being mounted in the device. In order to implement the above function, the shock absorption member 120 is provided at one side part of the battery pack 110, more specifically one side end surface and edge of the battery pack at which the power connector 111 is not provided.

Specifically, the shock absorption member 120 extends in a longitudinal direction (Z-axis direction) of the battery pack 110 by a predetermined length in a state of being fixed to one side end surface and a thickness-direction (Y-axis direction) side surface of the battery pack 110 in tight contact therewith.

Here, the shock absorption member 120 is not particularly restricted as long as the shock absorption member is flexible such that the shape of the shock absorption member is somewhat changeable, and an ultraviolet (UV) curing agent is contained in a polymer resin, such as an epoxy resin.

A bar-shaped air pocket portion 121, which is filled with no polymer resin, is provided at a position spaced apart from one side end surface of the battery pack 110 by a predetermined distance. Application of external shock to the battery pack 110 is inhibited or prevented by the air pocket portion 121.

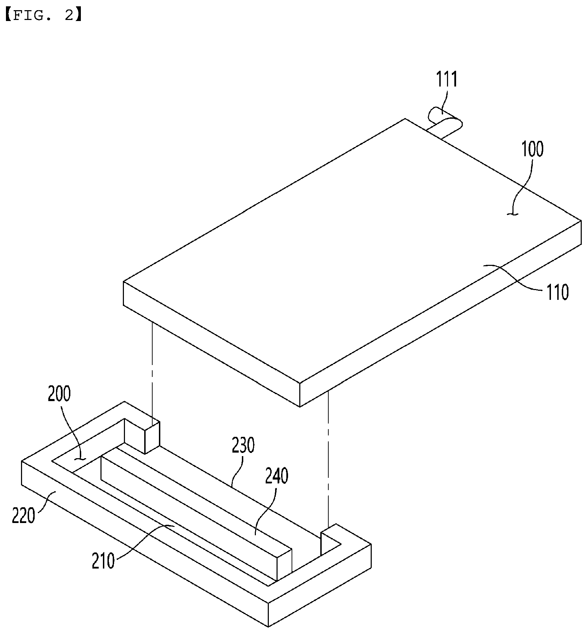

FIG. 2 is a perspective view of a jig configured to manufacture the battery pack assembly according to the preferred embodiment of the present invention.

The jig 200 configured to form the shock absorption member 120 at the battery pack 110 includes a bottom plate 210, a side wall 220, an opening 230, and an air formation bar 240.

Specifically, the bottom plate 210 is formed in a rectangular shape having a predetermined area, and four side walls 220 extend along an edge of the bottom plate 210 by a predetermined height.

It is preferable for the opening 230 to be provided in any one of the four side walls 220 such that one side edge of the battery pack 110 is seated on the bottom plate 210, and the air formation bar 240 is located among the four side walls 220 in a state of being in tight contact with the bottom plate 210.

One side part of the battery pack 110 is seated in the jig 200 having the above-described structure. When an inner space defined by the four side walls 220 is filled with a polymer resin and the polymer resin is hardened, a battery pack assembly 100 having a shock absorption member 120 attached to one side end surface and a part of an edge of the battery pack 110 in the state in which an air pocket portion 121 is formed in the middle of the shock absorption member is obtained.

Next, an apparatus for manufacturing the battery pack assembly according to the present invention will be described.

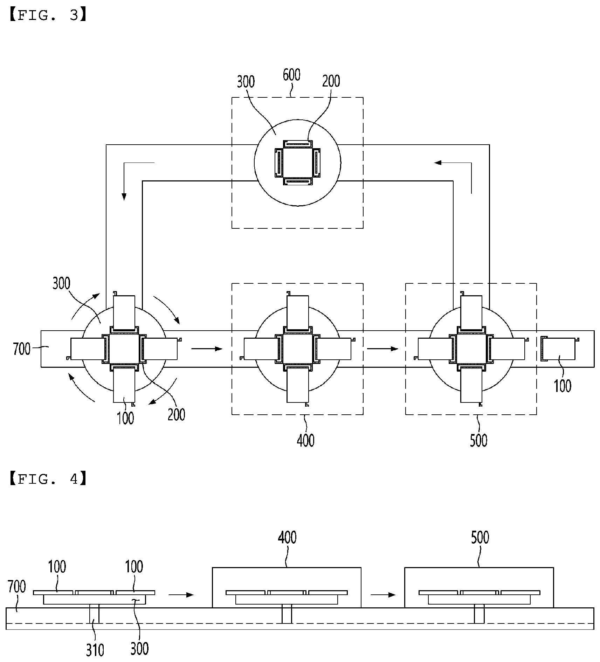

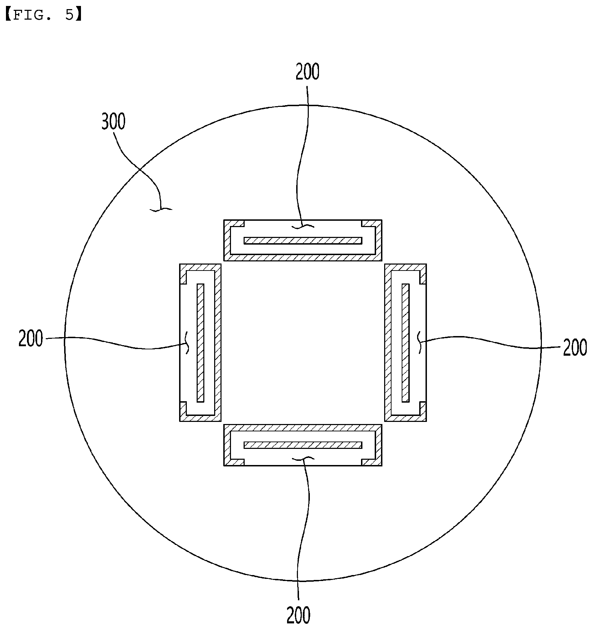

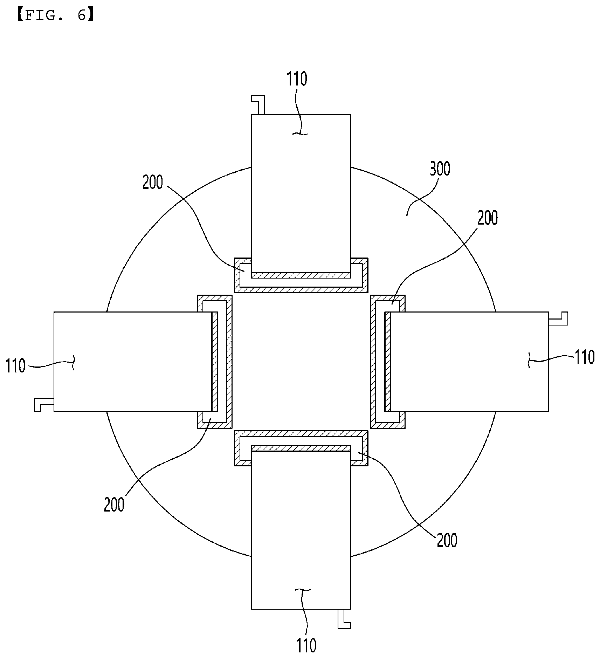

FIG. 3 is a plan view of an apparatus for manufacturing the battery pack assembly according to the preferred embodiment of the present invention, FIG. 4 is a front view of the apparatus shown in FIG. 3. In addition, FIG. 5 is a plan view showing the state in which a plurality of jigs is mounted to one support unit, and FIG. 6 is a plan view showing the state in which a plurality of battery packs is mounted to respective jigs.

As shown in FIGs. 3 to 6, the apparatus for manufacturing the battery pack assembly according to the present invention may include the above-described jig 200, a support unit 300, a hardening unit 400, an inspection unit 500, a washing unit 600, and a transfer unit 700.

The jig 200 was described in detail above, and therefore a description thereof will be omitted. The support unit 300, which is configured to support the entirety or a part of the battery pack 110 and the jig 200, may be formed in a flat circular shape having a predetermined area.

It is preferable for a plurality of jigs 200 to be seated on an upper surface of the support unit 300, and it is more preferable for an opening 230 of the jig 200 to be disposed so as to face outwards. The reason for this is that it is possible to easily mount the battery pack 110.

In particular, when a support shaft 310 is provided at a lower surface of the support unit 300 such that the support unit 300 is rotatable in a clockwise direction or a counterclockwise direction, there is an advantage in that it is possible to more easily mount the battery pack 110.

Of course, the support shaft 310 may be omitted, and therefore it is possible to mount the battery pack 110 to the jig 200 even though the support unit 300 is not rotated, and mounting of the battery pack 110 is not particularly restricted as long as the battery pack 110 can be moved to a desired position, for example the battery pack 110 can be manually mounted to the jig or an upper surface of the battery pack 110 can be suctioned using a suction plate and then the battery pack can be seated on the jig 200.

Although four jigs 200 are shown as being seated on the upper surface of the support unit 300 in the figures, which, however, is merely an example, the number of jigs 200 may be changed without limit.

The hardening unit 400 is configured to harden a polymer resin with which the jig 200 is filled. As an example, when an ultraviolet (UV) curing agent is contained in an epoxy resin, of which the shock absorption member 120 is made, the hardening unit may be a chamber having a UV lamp (not shown), and when a thermosetting resin is used, the hardening unit may be a chamber having a heat source (not shown) capable of heating the thermosetting resin to a predetermined temperature.

The inspection unit 500, which is configured to determine whether the shock absorption member 120 integrally formed with the battery pack 110 as the result of the polymer resin being hardened, i.e. the battery pack assembly 100, is defective, may be a vision camera; however, the present invention is not limited thereto, and it is possible for a worker to determine whether the battery pack assembly is defective with the naked eye or by hand.

Of course, in the inspection unit 500, the battery pack 110 is separated using a means identical or similar to the means that mounts the battery pack.

The washing unit 600, which is configured to remove some polymer resin remaining in the jig 200, may be a chamber having a high-pressure washing nozzle (not shown) provided at an upper surface or a side surface thereof.

The transfer unit 700, which is configured to sequentially transfer the support unit 300 having the plurality of jigs 200 seated thereon to the hardening unit 400, the inspection unit 500, and the washing unit 600, may be a conveyor belt; however, the present invention is not limited thereto.

As described above, the battery pack assembly manufacturing apparatus according to the present invention has a merit in that the support unit 300 having the jigs 200 seated thereon is sequentially moved to the hardening unit 400, the inspection unit 500, and the washing unit 600 by the transfer unit 700, which is formed in a closed loop shape, whereby mass production is possible and furthermore work can be rapidly performed.

Next, a method of manufacturing the battery pack assembly according to the present invention will be described.

The manufacturing method according to the present invention includes a first step of seating the battery pack 110 on a jig 200, a second step of filling the jig 200 with a polymer resin such that the polymer resin is located along one side of the battery pack 110, a third step of hardening the polymer resin such that a shock absorption member 120 is formed at one side of the battery pack 110, a fourth step of separating the battery pack 110 having the shock absorption member 120 formed thereon from the jig 200, and a fifth step of washing the jig 200 in order to remove the polymer resin remaining in the jig 200.

Meanwhile, a step of printing an upper surface of the battery pack 110 with a UV curable material may be further performed between the first step and the third step. In general, various kinds of information about the battery pack, such as date of manufacture, is printed on one side surface of the battery pack. It is preferable to print the above information after seating of the battery pack 110, and it is more preferable for a printing material to be UV curable paint.

The reason for this is that, when the material for the shock absorption member 120 is a UV curable resin, it is possible to simultaneously harden the polymer resin and the printing material in the third step of hardening the polymer resin.

In addition, a step of inspecting the battery pack assembly may be further performed between the third step and the fifth step. For example, a vision camera or a worker inspects whether the battery pack assembly is defective before or after the battery pack 110 having the shock absorption member 120 formed thereon is separated from the jig 200.

The battery pack assembly according to the present invention may be used in a device, for example a mobile device, such as a cellular phone; however, the present invention is not limited thereto.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible.

### (Description of Reference Numerals)

- 100:: Battery pack assembly
- 110:: Battery pack
- 111:: Power connector
- 120:: Shock absorption member
- 121:: Air pocket portion
- 200:: Jig
- 210:: Bottom plate
- 220:: Side wall
- 230:: Opening
- 240:: Air formation bar
- 300:: Support unit
- 310:: Support shaft
- 400:: Hardening unit
- 500:: Inspection unit
- 600:: Washing unit
- 700:: Transfer unit

## Claims

1. A battery pack assembly (100) comprising:
a battery pack (110); and
a shock absorption member (120) provided at one side of the battery pack (110),
wherein the shock absorption member (120) comprises a polymer resin provided with an air pocket portion (121),
wherein the air pocket portion (121) is bar-shaped, filled with no polymer resin and provided at a position spaced apart from one side end surface of the battery pack (110) by a predetermined distance so as to absorb external shock applied to the battery pack (110).

2. An apparatus for manufacturing the battery pack assembly (100) according to claim 1, the apparatus comprising:
a jig (200) configured to be filled with a polymer resin so that the shock absorption member (120) is formed at one side of the battery pack (110);
a support unit (300) having a flat shape configured to support the battery pack (110) and the jig (200), the support unit (300) having a predetermined area; and
a hardening unit (400) configured to harden the polymer resin with which the jig (200) is filled,
wherein the jig (200) comprises:
a rectangular bottom plate (210) having a predetermined area,
four side walls (220) extending along an edge of the bottom plate (210) by a predetermined height,
an opening (230) provided in any one of the four side walls (220) so that one side edge of the battery pack (110) is seated on the bottom plate (210), and
an air formation bar (240) located among the four side walls (220) in a state in which one side surface of the air formation bar (240) is in tight contact with the bottom plate (210).

3. The apparatus according to claim 2, wherein a plurality of jigs (200) are seated on an upper surface of the support unit (300).

4. The apparatus according to claim 3, wherein the support unit (300) is rotatable in a clockwise direction or a counterclockwise direction, the support unit (300) being formed in a circular shape, and one or more jigs (200) are located on the upper surface of the support unit (300).

5. The apparatus according to claim 2, further comprising a washing unit (600) configured to remove the polymer resin remaining in the jig (200) and the support unit (200) after the battery pack (110) having the shock absorption member (120) formed thereon is separated from the jig (200).

6. The apparatus according to claim 2, wherein the polymer resin is a UV curable resin.

7. A method of manufacturing the battery pack assembly (100) according to claim 1, the method comprising:
a first step of seating the battery pack (110) on a jig (200);
a second step of filling the jig (200) with a polymer resin so that the polymer resin is located along one side of the battery pack (110); and
a third step of hardening the polymer resin so that a shock absorption member (120) is formed at the one side of the battery pack (110),
wherein the jig (200) comprises:
a rectangular bottom plate (210) having a predetermined area,
four side walls (220) extending along an edge of the bottom plate (210) by a predetermined height,
an opening (230) provided in any one of the four side walls (220) so that one side edge of the battery pack (110) is seated on the bottom plate (210), and
an air formation bar (240) located among the four side walls (220) in a state in which one side surface of the air formation bar (240) is in tight contact with the bottom plate (210), and
wherein an inside of each of the four side walls (220) is filled with the polymer resin.

8. The method according to claim 7, further comprising a fourth step of separating the battery pack (110) having the shock absorption member (120) formed thereon from the jig (200).

9. The method according to claim 8, further comprising a fifth step of washing the jig (200) in order to remove the polymer resin remaining in the jig (200).

10. The method according to claim 7, wherein
the polymer resin is a UV curable resin, and
a step of printing an upper surface of the battery pack (110) with a UV curable material is further performed between the first step and the third step.

11. The method according to claim 9, wherein a step of inspecting the battery pack assembly (100) is further performed between the third step and the fifth step.

## Patentansprüche

1. Batteriepackanordnung (100), aufweisend:
einen Batteriepack (110); und
ein Stoßdämpfungselement (120), das an einer Seite des Batteriepacks (110) vorgesehen ist,
wobei das Stoßdämpfungselement (120) ein Polymerharz mit einem darin vorgesehenen Lufttaschenabschnitt (121) aufweist,
wobei der Lufttaschenabschnitt (121) stabförmig und nicht mit Polymerharz gefüllt ist und an einer Position vorgesehen ist, die von einer Endfläche auf einer Seite des Batteriepacks (110) um einen vorbestimmten Abstand beabstandet ist, um einen auf den Batteriepack (110) ausgeübten äußeren Stoß zu absorbieren.

2. Vorrichtung zur Herstellung der Batteriepackanordnung (100) nach Anspruch 1, wobei die Vorrichtung aufweist:
eine Formvorrichtung (200), die konfiguriert ist, um mit einem Polymerharz befüllt zu werden, so dass das Stoßdämpfungselement (120) an einer Seite des Batteriepacks (110) ausgebildet wird;
eine Stützeinheit (300), die eine flache Form ausweist und konfiguriert ist, um den Batteriepack (110) und die Formvorrichtung (200) zu stützen, wobei die Stützeinheit (300) eine vorgegebene Fläche aufweist; und
eine Aushärtungseinheit (400), die konfiguriert ist, um das Polymerharz, mit dem die Formvorrichtung (200) befüllt ist, auszuhärten,
wobei die Formvorrichtung (200) aufweist:
eine rechteckige Bodenplatte (210) mit einer vorbestimmten Fläche,
vier Seitenwände (220), die sich entlang eines Randes der Bodenplatte (210) um eine vorbestimmte Höhe erstrecken,
eine Öffnung (230), die in einer beliebigen der vier Seitenwände (220) ausgebildet ist, so dass ein Seitenrand des Batteriepacks (110) auf der Bodenplatte (210) aufliegt, und
einen Luftbildungsstab (240), der zwischen den vier Seitenwänden (220) angeordnet ist, wobei sich eine Seitenfläche des Luftbildungsstabs (240) in engem Kontakt mit der Bodenplatte (210) befindet.

3. Vorrichtung nach Anspruch 2, wobei eine Vielzahl von Formvorrichtungen (200) auf einer oberen Oberfläche der Stützeinheit (300) angeordnet ist.

4. Vorrichtung nach Anspruch 3, wobei die Stützeinheit (300) im Uhrzeigersinn oder entgegen dem Uhrzeigersinn drehbar ist, die Stützeinheit (300) kreisförmig ausgebildet ist und eine oder mehrere Formvorrichtungen (200) auf der oberen Oberfläche der Stützeinheit (300) angeordnet sind.

5. Vorrichtung nach Anspruch 2, ferner aufweisend eine Reinigungseinheit (600), die konfiguriert ist, um das in der Formvorrichtung (200) und der Stützeinheit (200) verbleibende Polymerharz zu entfernen, nachdem der Batteriepack (110), an dem das Stoßdämpfungselement (120) ausgebildet ist, von der Formvorrichtung (200) getrennt wurde.

6. Vorrichtung nach Anspruch 2, wobei das Polymerharz ein UV-härtbares Harz ist.

7. Verfahren zur Herstellung der Batteriepackanordnung (100) nach Anspruch 1, wobei das Verfahren aufweist:
einen ersten Schritt des Platzierens des Batteriepacks (110) auf einer Formvorrichtung (200);
einen zweiten Schritt des Befüllens der Formvorrichtung (200) mit einem Polymerharz, so dass sich das Polymerharz entlang einer Seite des Batteriepacks (110) befindet; und
einen dritten Schritt des Aushärtens des Polymerharzes, so dass ein Stoßdämpfungselement (120) an der einen Seite des Batteriepacks (110) ausgebildet wird,
wobei die Formvorrichtung (200) aufweist:
eine rechteckige Bodenplatte (210) mit einer vorbestimmten Fläche,
vier Seitenwände (220), die sich entlang eines Randes der Bodenplatte (210) um eine vorbestimmte Höhe erstrecken,
eine Öffnung (230), die in einer beliebigen der vier Seitenwände (220) vorgesehen ist, so dass ein Seitenrand des Batteriepacks (110) auf der Bodenplatte (210) aufliegt, und
einen Luftbildungsstab (240), der zwischen den vier Seitenwänden (220) angeordnet ist, wobei sich eine Seitenfläche des Luftbildungsstabs (240) in engem Kontakt mit der Bodenplatte (210) befindet, und
wobei das Innere jeder der vier Seitenwände (220) mit dem Polymerharz gefüllt ist.

8. Verfahren nach Anspruch 7, ferner aufweisend einen vierten Schritt des Trennens des Batteriepacks (110), an dem das Stoßdämpfungselement (120) ausgebildet ist, von der Formvorrichtung (200).

9. Verfahren nach Anspruch 8, ferner aufweisend einen fünften Schritt des Reinigens der Formvorrichtung (200), um das in der Formvorrichtung (200) verbleibende Polymerharz zu entfernen.

10. Verfahren nach Anspruch 7, wobei
das Polymerharz ein UV-härtbares Harz ist und
ferner ein Schritt des Bedruckens einer oberen Oberfläche des Batteriepacks (110) mit einem UV-härtbaren Material zwischen dem ersten Schritt und dem dritten Schritt durchgeführt wird.

11. Verfahren nach Anspruch 9, wobei ferner ein Schritt des Prüfens der Batteriepackanordnung (100) zwischen dem dritten Schritt und dem fünften Schritt durchgeführt wird.

## Revendications

1. Bloc-batterie (100), comprenant:
un bloc-batterie (110); et
un élément d'absorption de chocs (120) agencé sur un côté du bloc-batterie (110),
l'élément d'absorption de chocs (120) comprenant une résine polymère agencée avec une partie de poche d'air (121),
la partie de poche d'air (121) étant en forme de barre, remplie sans résine polymère et agencée dans une position espacée d'une surface terminale latérale du bloc-batterie (110) par une distance prédéterminée afin d'absorber des chocs externes appliqués au bloc-batterie (110).

2. Appareil pour la fabrication de l'ensemble de bloc-batterie (100) selon la revendication 1, l'appareil comprenant:
un gabarit (200) configuré pour être rempli d'une résine polymère de sorte que l'élément absorbant les chocs (120) soit formé sur un côté du bloc-batterie (110) ;
un module de support (300) d'une forme plate configurée pour supporter le bloc-batterie (110) et le gabarit (200), le module de support (300) ayant une surface prédéterminée ; et
une unité de durcissement (400) configurée pour durcir la résine polymère dont le gabarit (200) a été rempli,
le gabarit (200) comprenant :
une plaque inférieure rectangulaire (210) d'une superficie prédéterminée,
quatre parois latérales (220) s'étendant le long d'un bord de la plaque inférieure (210) sur une hauteur prédéterminée,
une ouverture (230) agencée dans une quelconque des quatre parois latérales (220) de sorte qu'un bord latéral du bloc-batterie (110) soit installé sur la plaque inférieure (210), et
une barre de formation d'air (240) située entre les quatre parois latérales (220) dans un état où une surface latérale de la barre de formation d'air (240) est en contact étroit avec la plaque inférieure (210).

3. Appareil selon la revendication 2, une pluralité de gabarits (200) étant placés sur une surface supérieure du module de support (300).

4. Appareil selon la revendication 3, le module de support (300) pouvant être pivoté dans le sens horaire ou le sens antihoraire, le module de support (300) étant réalisé avec une forme circulaire, et un ou plusieurs gabarits (200) étant situés sur la surface supérieure du module de support (300).

5. Appareil selon la revendication 2, comprenant en outre une unité de lavage (600) configurée pour extraire la résine polymère restant dans le gabarit (200) et le module de support (200) après le bloc-batterie (110), sur lequel est formé l'élément d'absorption des chocs (120), étant séparé du gabarit (200).

6. Appareil, selon la revendication 2, la résine polymère est une résine polymère durcissable aux UV.

7. Procédé de fabrication de l'ensemble de bloc-batterie (100) selon la revendication 1, le procédé comprenant:
une première étape d'installation du pack batterie (110) sur un gabarit (200) ;
une deuxième étape de remplissage du gabarit (200) avec une résine polymère afin que la résine polymère soit située le long d'un côté du bloc-batterie (110) ; et
une troisième étape de durcissement de la résine polymère afin qu'un élément d'absorption de chocs (120) soit formé sur un côté du bloc-batterie (110) ;
le gabarit (200) comprenant :
une plaque inférieure rectangulaire (210) d'une superficie prédéterminée,
quatre parois latérales (220) s'étendant le long d'un bord de la plaque inférieure (210) sur une hauteur prédéterminée,
une ouverture (230) agencée dans une quelconque des quatre parois latérales (220) de sorte qu'un bord latéral du bloc-batterie (110) soit installé sur la plaque inférieure (210), et
une barre de formation d'air (240) située entre les quatre parois latérales (220) dans un état dans lequel une surface latérale de la barre de formation d'air (240) est en contact étroit avec la plaque inférieure (210), et
l'intérieur de chacune des quatre parois latérales (220) étant rempli de la résine polymère.

8. Procédé selon la revendication 7, comprenant en outre une quatrième étape de séparation du bloc-batterie (110), sur lequel est formé l'élément d'absorption de chocs (120), du gabarit (200).

9. Procédé selon la revendication 8, comprenant également une cinquième étape de lavage du gabarit (200) afin d'enlever la résine polymère restant dans le gabarit (200).

10. Procédé selon la revendication 7,
la résine polymère étant une résine durcissable aux UV, et
une étape d'impression d'une surface supérieure du bloc-batterie (110) avec un matériau durcissable aux UV étant effectuée en outre entre la première et la troisième étape.

11. Procédé selon la revendication 9, une étape d'inspection de l'ensemble du pack batterie (100) étant effectuée en outre entre la troisième étape et la cinquième étape.
